# EUROPEAN PATENT APPLICATION

(11) **EP 4 429 356 A1**
(43) Date of publication of application: **11.09.2024**
(21) Application number: 21963257.7
(22) Date of filing: 04.11.2021
(51) Int. Cl.: H04W 72/04

(54) **TERMINAL, BASE STATION, AND MONITORING METHOD**

(71) Applicant: NTT DOCOMO, INC., Tokyo 100-6150 (JP)
(72) Inventor: OKANO, Mayuko, Tokyo 100-6150 (JP); SHIBAIKE, Naoya, Tokyo 100-6150 (JP); HARADA, Hiroki, Tokyo 100-6150 (JP)
(74) Representative: Hoffmann Eitle
(86) International application number: PCT/JP2021/040680
(87) International publication number: WO 2023/079661

(57) **Abstract**

A terminal includes: a control unit configured to determine a specific time range such that a first time position for monitoring a first downlink control channel is included within the specific time range in a slot group; and a reception unit configured to monitor the first downlink control channel within the specific time range.

## Description

### Technical Field

The present invention relates to a terminal, a base station, and a monitoring method in a radio communication system.

### Background Art

In NR (New radio) (also referred to as "5G") which is a successor system of LTE (Long Term Evolution (LTE), techniques for satisfying requirements such as a large-capacity system, a high-speed data transmission rate, low delay, simultaneous connection of a large number of terminals, low cost, power saving and the like have been studied. Also, in NR, use of high-frequency bands such as 24.25 GHz to 52.6 GHz and 52.6 GHz to 71 GHz is being studied.

In addition, in NR, operations such as monitoring of type0-PDCCH in a slot associated with SSB received by a terminal are defined (Non-Patent Documents 1, 2, etc.).

### Related Art Document

### Non-Patent Documents

Non-Patent Document 1: 3GPP TS 38.213 V15.14.0 (2021-06)
Non-Patent Document 2: 3GPP TS 38.331 V15.15.0 (2021-09)

### SUMMARY OF THE INVENTION

### Problems to be Solved by the Invention

When it is assumed that a high-frequency band such as 52.6 GHz to 71 GHz is used, it is assumed that the subcarrier spacing becomes large and the slot length becomes short. Therefore, from the viewpoint of the terminal capability, it is considered that the terminal performs PDCCH monitoring, in units of multiple slots (multi-slots), only in a specific time range (slot/symbol) in the multi-slot.

However, in operation of multi-slot PDCCH monitoring, when monitoring is performed only in a specific time range as described above, a PDCCH of a search space that cannot be monitored in the existing technology may occur. That is, in multi-slot PDCCH monitoring, there is a problem that a case where a terminal cannot appropriately monitor a PDCCH may occur.

The present invention has been made in view of the above, and an object of the present invention is to provide a technique for a terminal to appropriately perform PDCCH monitoring in multi-slot PDCCH monitoring. Means for Solving the Problems

According to the disclosed technique, there is provided a terminal including:
a control unit configured to determine a specific time range such that a first time position for monitoring a first downlink control channel is included within the specific time range in a slot group; and
a reception unit configured to monitor the first downlink control channel within the specific time range.

### Effects of the Invention

According to the disclosed technique, in multi-slot PDCCH monitoring, the terminal can appropriately perform PDCCH monitoring.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing an example of a band;
[Fig. 4] FIG. 4 is a diagram showing an example of a limitation of monitoring;
[Fig. 5] FIG. 5 is a diagram showing an example of a limitation on monitoring;
[Fig. 6] FIG. 6 is a diagram illustrating an example of UE capability related to monitoring;
[Fig. 7] FIG. 7 shows an example of UE capability related to monitoring;
[Fig. 8] FIG. 8 is a diagram showing a Table 13-11;
[Fig. 9] FIG. 9 is a diagram showing a Table 13-12;
[Fig. 10] FIG. 10 is a diagram showing an example of a monitoring slot corresponding to SSB;
[Fig. 11] FIG. 11 is a diagram showing an example of a monitoring slot corresponding to SSB;
[Fig. 12] FIG. 12 is a diagram showing an example of a monitoring slot corresponding to SSB;
[Fig. 13] FIG. 13 is a diagram showing an example of a monitoring slot corresponding to SSB;
[Fig. 14] FIG. 14 is a diagram showing an example of basic operation of Example 1;
[Fig. 15] FIG. 15 is a diagram for explaining Example 1;
[Fig. 16] FIG. 16 is a diagram for explaining Example 1;
[Fig. 17] FIG. 17 is a diagram for explaining Example 1;
[Fig. 18] FIG. 18 is a diagram for explaining Example 1;
[Fig. 19] FIG. 19 is a diagram showing an example of basic operation of Example 2;
[Fig. 20] FIG. 20 is a diagram for explaining Example 2;
[Fig. 21] FIG. 21 is a diagram for explaining Example 2;
[Fig. 22] FIG. 22 is a diagram for explaining Example 2;
[Fig. 23] FIG. 23 is a diagram showing a configuration example of a base station 10;
[Fig. 24] FIG. 24 is a diagram showing a configuration example of ta terminal 20;
[Fig. 25] FIG. 25 is a diagram showing an example of a hardware configuration of the base station 10 or the terminal 20 according to an embodiment of the present invention;
[Fig. 26] FIG. 26 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR (e.g., Non-Patent Documents 1 and 2). The radio communication system (the base station 10 and the terminal 20) according to the present embodiment can basically perform an operation according to an existing technical specification. However, in order to solve the problem in the case where the use of the high frequency band is assumed, the base station 10 and the terminal 20 also perform operations that are not included in the existing technical specification. In the description of Examples described later, operations and the like that are not in the existing technical specifications are mainly described. Note that the numerical values described below are all examples.

In the embodiment of the present invention, the duplex scheme may be a time division duplex (TDD) scheme, a frequency division duplex (FDD) scheme, or another scheme (for example, flexible duplex).

In the embodiment of the present invention, "configuring" a radio parameter or the like may mean that a predetermined value is pre-configured or that a radio parameter notified from the base station 10 or the terminal 20 is configured. Note that the notation "A/B" used in the present embodiment means "A or B, or A and B" unless the meaning is clear from the context.

### (System Configuration)

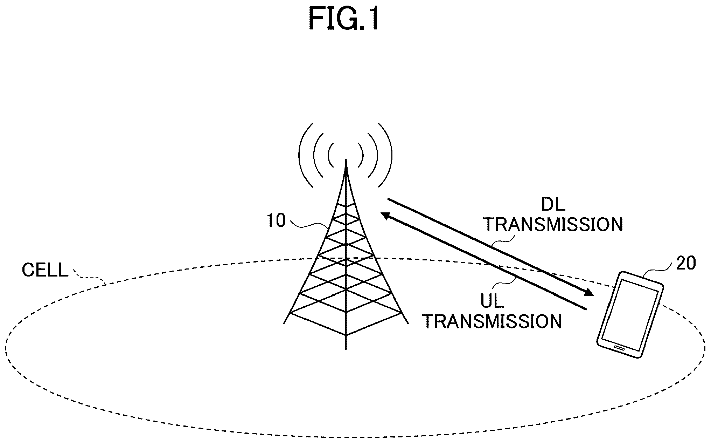

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency-domain, at least 15 kHz, 30 kHz, 120 kHz, and 240 kHz are supported as subcarrier spacing (SCS). In the present embodiment, a larger SCS is supported. Further, a resource block is formed with a predetermined number (for example, 12) of consecutive subcarriers regardless of SCS.

When performing initial access to a cell, the terminal 20 detects SSB (SS/PBCH block), and identifies SCS for PDCCH, PDSCH, PUCCH, or the like, for example, based on PBCH included in the SSB.

In the time domain, a slot is formed with a plurality of OFDM symbols (for example, 14 symbols regardless of the subcarrier spacing). Hereinafter, an OFDM symbol is referred to as a "symbol". A slot is a scheduling unit. Further, a subframe of a 1 ms section is defined, and a frame including 10 subframes is defined. The number of symbols per slot is not limited to 14.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

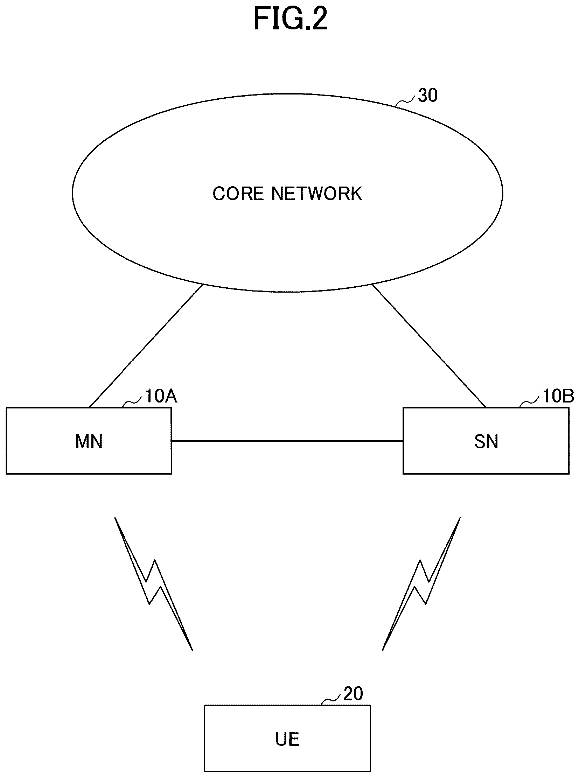

FIG. 2 illustrates a configuration example of a radio communication system in a case where NR-Dual connectivity (NR-DC) is executed. As shown in FIG. 2, the base stations 10A and 10B are provided as a master node (MN) and a secondary node (SN), respectively. The base stations 10A and 10B are connected to a core network. The terminal 20 communicate with both the base stations 10A and 10B.

A cell group provided by the base station 10A serving as the MN is referred to as a master cell group (MCG), and a cell group provided by the base station 10B serving as the SN is referred to as a secondary cell group (SCG). The operation in this embodiment may be performed in either of the configurations shown in FIGS. 1 and 2.

In the radio communication system according to the present embodiment, when an unlicensed band is used, LBT (Listen Before Talk) is executed. The base station 10 or the terminal 20 performs transmission when the LBT result indicates "idle", and does not perform transmission when the LBT result indicates "busy".

### (Frequency Band)

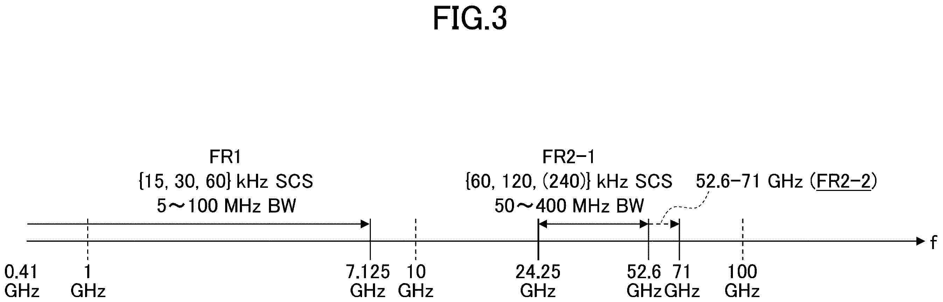

FIG. 3 shows an example of frequency bands used in NR. As frequency bands (may be referred to as frequency ranges) in NR, there are three frequency bands of FR1 (0.41 GHz to 7.125 GHz), FR2-1 (24.25 GHz to 52.6 GHz), and FR2-2 (52. 6 GHz to 71 GHz). The FR2-1 and the FR2-2 may be collectively referred to as FR2. As illustrated in FIG. 3, in FR1, 15 kHz, 30 kHz, and 60 kHz are supported SCS, and 5 MHz to 100 MHz are supported as bandwidth (BW). In FR2-1, 60 kHz, 120 kHz, and 240 kHz (only SSB) are supported as SCS, and 50 MHz to 400 MHz are supported as bandwidth (BW). In FR2-2, it is assumed that a larger SCS is supported than in 240 kHz. However, these support situations are merely examples.

The radio communication system according to the present embodiment is assumed to use the frequency bands FR2-1 and FR2-2 in addition to FR1.

### (Restriction of UE Capability in PDCCH Monitoring)

In a high-frequency band such as 52.6 GHz to 71 GHz, a subcarrier spacing (SCS) larger than the SCS used in the existing FR1/2 is introduced. For example, SCSs such as 480 kHz and 960 kHz are introduced.

On the other hand, according to the existing NR specifications (Non-Patent Document 1 and the like), due to the limitation of the processing capability of UE, the number of PDCCH candidates to monitor/the maximum number of "BDs/CCEs" per slot decreases as the SCS increases.

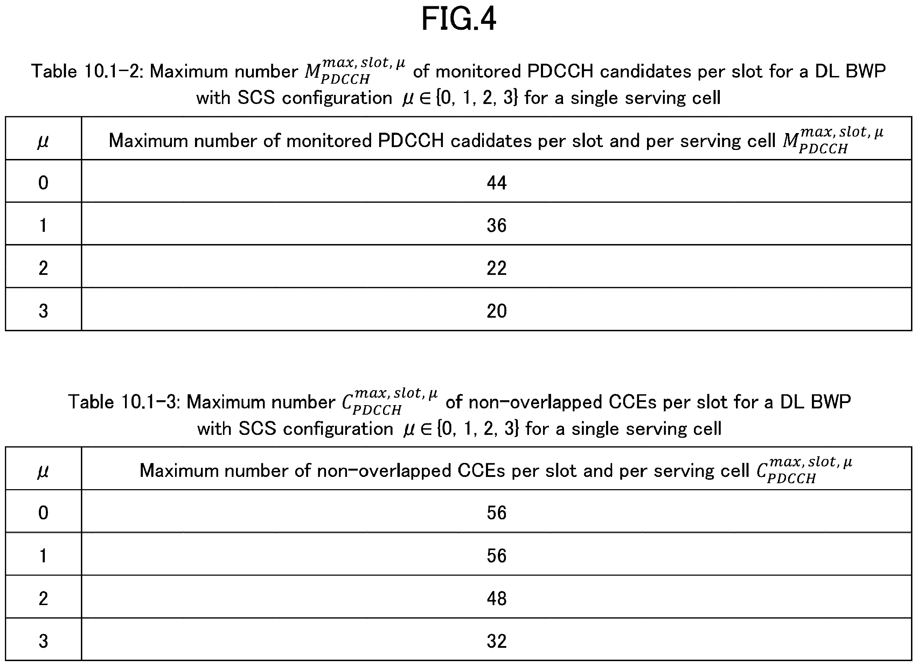

FIG. 4 shows an example of technical specifications extracted from Non-Patent Document 1. Table 10.1-2 indicates the maximum number of PDCCH candidates to monitor per slot, and Table 10.1-3 indicates the maximum number of CCEs to monitor per slot. As shown in FIG. 4, the larger the SCS represented by the numerology µ, the smaller the number of PDCCH candidates/the number of CCEs.

In such a case, AL (aggregation level) may be reduced, and thus the reliability may be reduced. In addition, types of DCI formats to monitor are limited.

### (On Slot Group)

In the present embodiment, it is assumed that a slot group including a plurality of slots (multi-slot) is used. Although it is assumed that the slot group is used in a high frequency band, the slot group may be used in a frequency band other than the high frequency band.

Multi-slot PDCCH monitoring is performed based on slots in a slot group. Each slot group consists of X consecutive slots. A plurality of slot groups are continuously arranged so as not to overlap each other. The start of the first slot group in a subframe is aligned with the subframe boundary. Also, the start of each slot group is aligned with a slot boundary. In addition, a BD budget common to all search spaces exists.

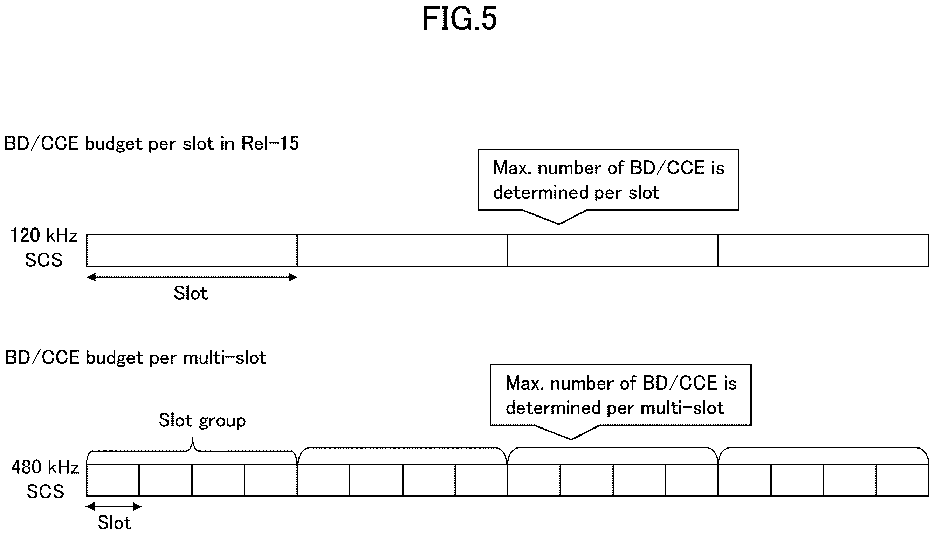

FIG. 5 shows a method of determining BD/CCE budget (maximum number of BDs/CCEs) in a case of 120 kHz SCS of the existing technology (Rel-15) and a method of determining BD/CCE budget (maximum number of BDs/CCEs) in a case of 480 kHz SCS. As shown in FIG. 5, in Rel-15, the maximum number of BDs/CCEs is determined for each slot, and in 480 kHz SCS, the maximum number of BDs/CCEs is determined for each multi-slot constituting a slot group.

For example, if SCS=480 khz is supported, the terminal 20 reports the maximum number of BDs/CCEs supported for X=4 slots to the base station 10. In addition, for example, if SCS = 960 kHz is supported, the terminal 20 reports the maximum number of supported BDs/CCEs for X=8 slots to the base station 10.

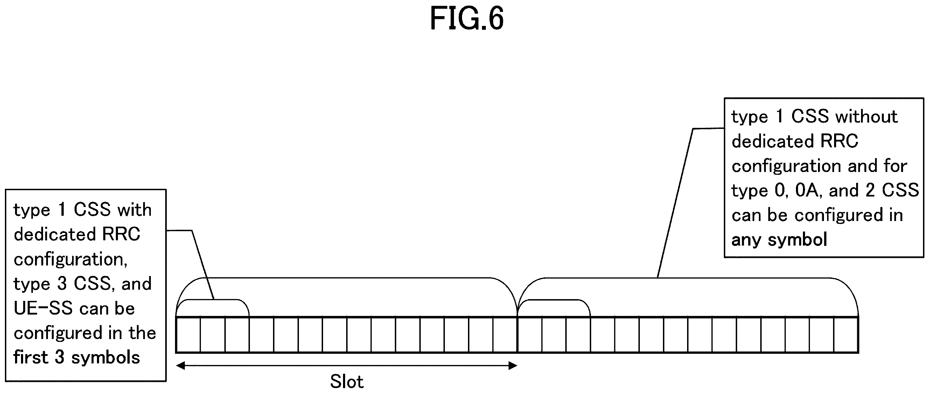

FIG. 6 shows an example of a capability that a UE must support for PDCCH monitoring in Rel-15. As shown in FIG. 6, for type1 CSS with dedicated RRC configuration, type3 CSS, and UE-SS (UE-specific search space), the UE must support that the monitoring occasion is within the first 3 symbols of the slot. In addition, for type1 CSS without dedicated RRC configuration, and for CSS type0, 0A, and 2, the UE must support that any OFDM symbol in a slot is used as a monitoring occasion.

In multi-slot PDCCH monitoring in Rel-17, to reduce UE complexity, the location of all types of SS (search space) may be restricted to certain slot (s)/symbol(s) within a slot group. That is, the UE monitors a PDCCH only in a specific time range in each slot group. This specific time range is hereinafter referred to as "Y slot". Here, the unit of the specific time range is a slot, but the unit of the specific time range may be a symbol, or, a slot and a symbol.

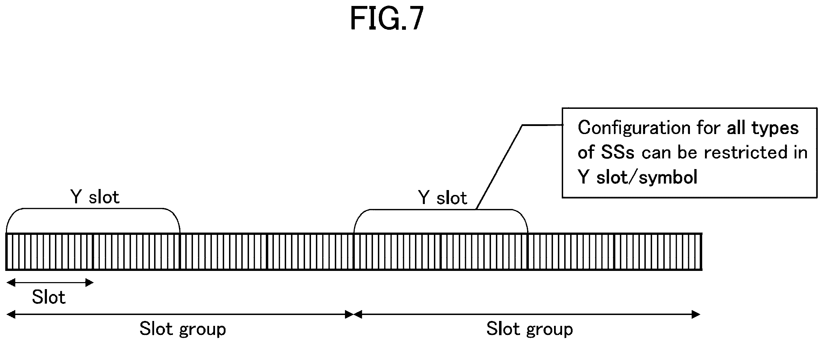

An example is shown in FIG. 7. In the example of FIG. 7, in each slot group of X=4, the first two consecutive slots are set as Y slot, and each SS is configured such that time positions of all types of SSs exist in the Y slot.

### (On type0-PDCCH CSS monitoring)

Here, a method of determining a monitoring occasion (monitoring time position) of the type0-PDCCH CSS to monitor by the terminal 20 for receiving SIB1 or the like at the time of initial access or the like will be described. Basically, the terminal 20 receives SSB from the base station 10, and monitors a type0-PDCCH in a type0-PDCCH CSS in slot n0 calculated based on the number (index) of the SSB (for example, a SSB having the highest reception power among a plurality of SSBs of a plurality of beams transmitted from the base station 10).

For example, in the association between the SSB and the slot n0 of the type0-PDCCH CSS in the multiplexing pattern 1 disclosed in Non-Patent Document 1, the slot no can be calculated by n₀=(O*2*^{µ}*+floor(i*M)) mod Nₛₗₒₜ^{frame,*µ*}.

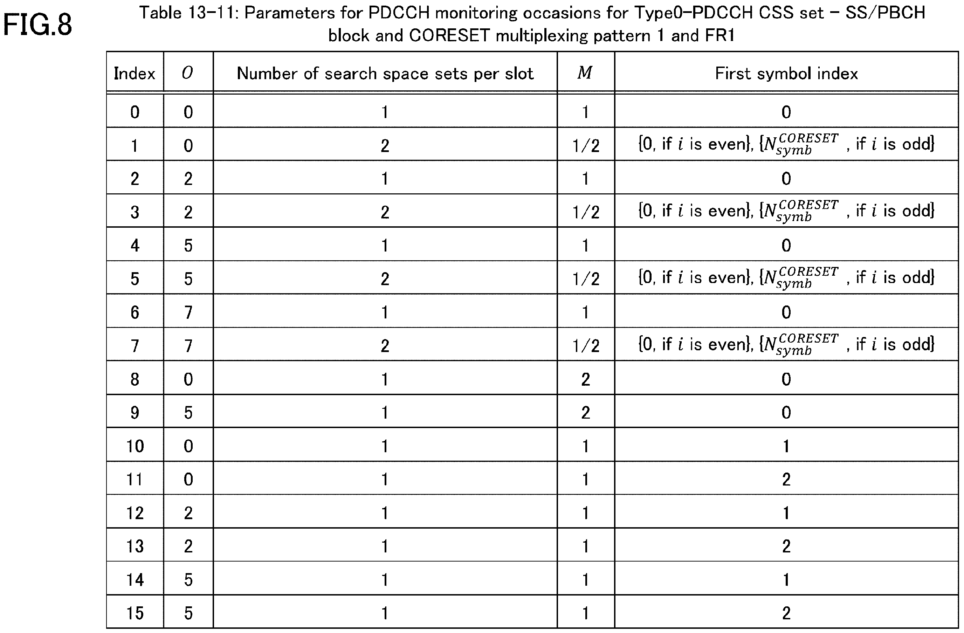

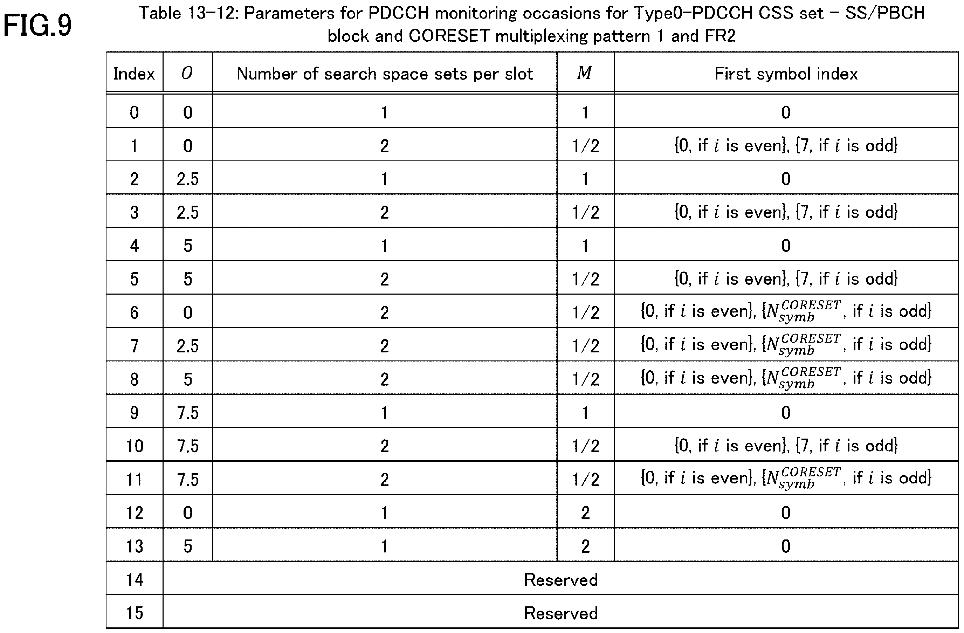

O and M are values corresponding to indices defined in Table 13-11/12 (FIGS. 8 and 9) of Non-Patent Document 1. The indices are notified from the base station 10 to the terminal 20. Nₛₗₒₜ^{frame,*µ*} is the number of slots per frame when SCS is 15×2*^{µ}*. In the multiplexing pattern 1, the terminal 20 monitors two consecutive slots (n0 and n0+1 slots).

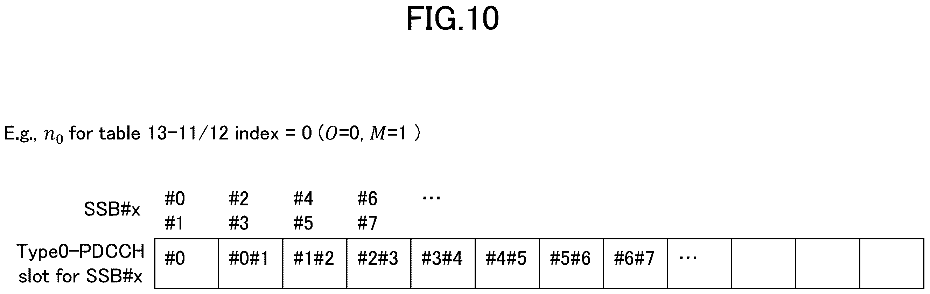

Here, a specific example will be described. When index=0 in Table 13-11/12, that is, when O=0 and M=1, the monitoring slot of type0-PDCCH CSS for SSB #x is as shown in FIG. 10. For example, when x=0, i=0 in the above equation, and thus no=0, no+1=1, and the slots 0 and 1 are the monitoring slots.

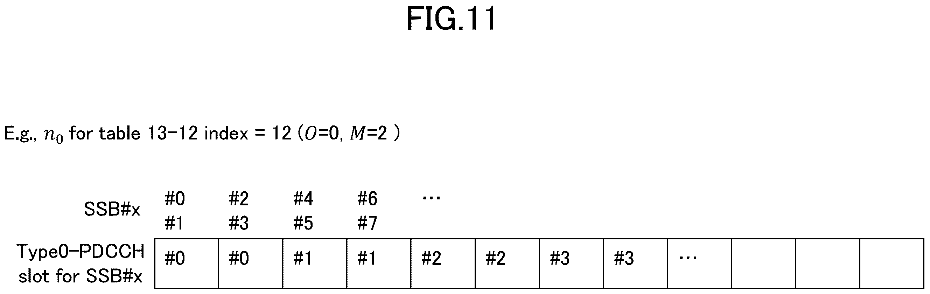

FIG. 11 shows a case where index=12 in Table 13-11/12, that is, a case where O=0 and M=2.

### (On type0A-PDCCH CSS monitoring)

The association between slots of type0A-PDCCH CSS used for reception of SIB other than SIB1 and SSBs is defined as follows in Non-Patent Document 2: " The [x*N+K]th PDCCH monitoring occasion (s) for SI message in SI-window corresponds to the Kth transmitted SSB, where x = 0, 1, ...X-1, K = 1, 2, ...N, N is the number of actual transmitted SSBs determined according to ssb-PositionsInBurst in SIB1 and X is equal to CEIL(number of PDCCH monitoring occasions in SI-window/N)".

### (On type2-PDCCH CSS monitoring)

The association between slots of type2-PDCCH CSS used for paging and SSBs is defined in TS38.304 as follows: "A PO is a set of 'S*X ' consecutive PDCCH monitoring occasions where 'S' is the number of actual transmitted SSBs determined according to ssb-PositionsInBurst in SIB1 and X is the nrofPDCCH-MonitoringOccasionPerSSB-InPO if configured or is equal to 1 otherwise. The [x*S+K]th PDCCH monitoring occasion for paging in the PO corresponds to the Kth transmitted SSB, where x=0,1, ...,X-1, K=1,2, ...,S.".

### (Problem)

In the present embodiment, the multi-slot configuration in which the Y slot is configured is used. The problem in this case will be described below.

### <Problem 1>

If the position of the Y slot corresponding to the multi-slot PDCCH monitoring capability is fixed in all the terminals, the type0-PDCCH CSS monitoring slot (CORESET#0 monitoring slot) may not be included in the Y slot depending on the SSB associated with the best beam in the terminal 20.

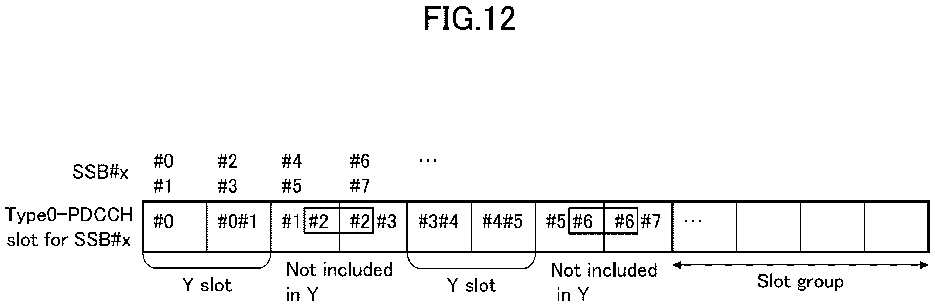

For example, in the case (O=0, M=1) shown in FIG. 12, the monitoring slot of CORESET#0 corresponding to SSB#2/#6 and the like is not included in the Y slot.

In order to avoid the above situation, the type0-PDCCH CSS monitoring occasion needs to be included in the Y slot for all SSB indices.

### <Problem 2>

When the SSB corresponding to the best beam in the terminal 20 is changed due to beam switching or the like, the slot of the type0-PDCCH CSS is also changed, and as a result, the slot of the type0-PDCCH CSS may not be included in the Y slot.

It is conceivable that the Y slot is changed to match the slot of the type0-PDCCH CSS in accordance with the change of the slot of the type0-PDCCH CSS. However, in this case, there is a possibility that USS and/or other SS configured in the Y slot before the change become invalid and cannot be monitored.

Therefore, it is necessary to perform RRC reconfiguration so that all types of SSs are included in the updated Y slot.

However, from the perspective of signaling overhead, frequent RRC reconfiguration is not preferable. In particular, in operation of a high-frequency band of 52.6 GHz to 71 GHz, a beam is thinner than in a low-frequency band, and it is assumed that beam switching is frequently performed. Therefore, frequent RRC reconfiguration is not preferable. However, the use of RRC reconfiguration may not be excluded.

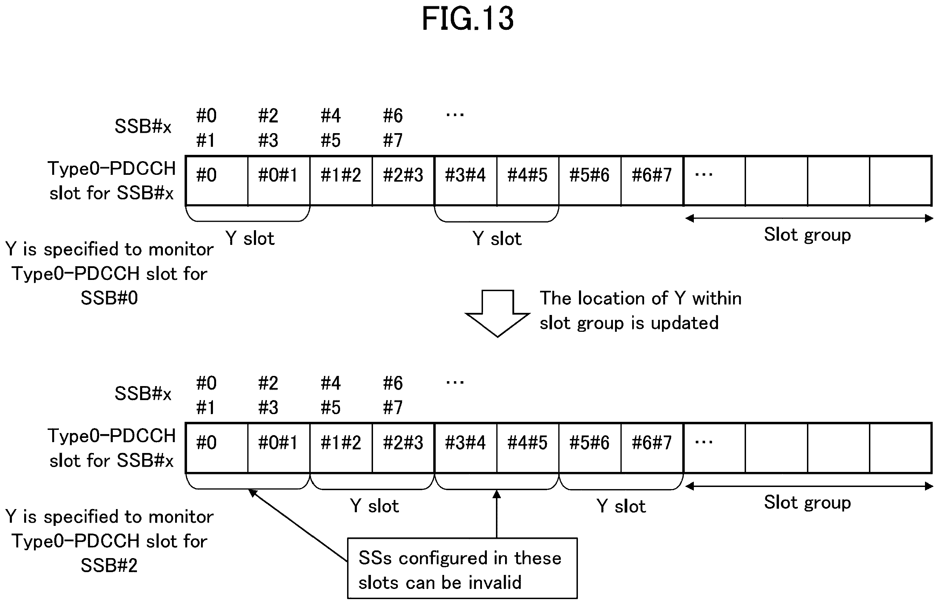

FIG. 13 shows an example of a situation in which the above problem occurs. In the upper part of FIG. 13, it is assumed that the Y slot is defined (or configured) to monitor type0-PDCCH CSS slots for SSB#0 and the like. Thereafter, the position of the Y slot in a slot group is updated to the position shown in the lower part. Since the updated Y slot is at a position where a type0-PDCCH CSS slot for SSB#2 and the like is monitored, the type0-PDCCH CSS configured in the slot before the update cannot be monitored in the slot before the update.

### (Outline of Examples)

Hereinafter, as operation examples for solving the above-described problem, Example 1 and Example 2 will be described. Example 1 corresponds to the problem 1, and Example 2 corresponds to the problem 2. Example 1 and Example 2 may be carried out in combination or separately. The outlines of Example 1 and Example 2 are as follows.

Example 1: A relationship between SSBs and type0-PDCCH CSS monitoring occasions is defined (or configured) in consideration of a limitation of a multi-slot PDCCH monitoring capability in the terminal 20.

Example 2: To realize alignment between type0-PDCCH CSS slots and other SS slots.

### (Example 1)

In Example 1, the relationship between SSBs and type0-PDCCH monitoring occasions in the SSB/CORESET#0 multiplexing pattern 1 is defined (or configured) in consideration of restriction of the multi-slot PDCCH monitoring capability. Although the multiplexing pattern 1 is assumed in the present Example, the technique according to the present invention is not limited to the multiplexing pattern 1, and can be applied to, for example, multiplexing patterns 2 and 3.

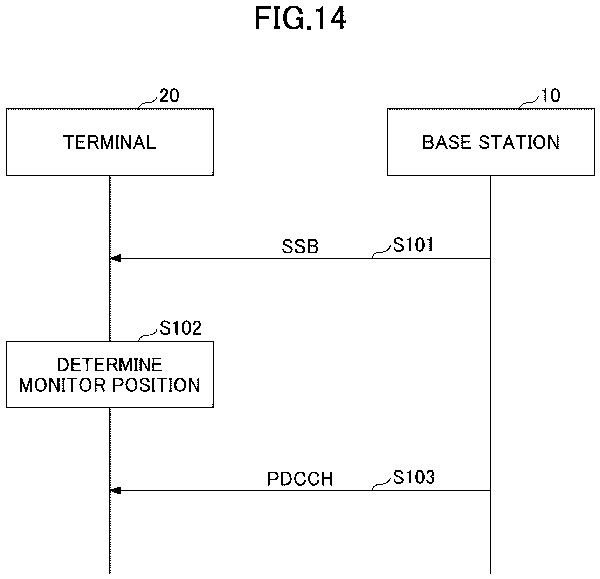

An example of a basic operation in Example 1 will be described with reference to FIG. 14. In S101, the terminal 20 receives SSB from the base station 10. In S102, the terminal 20 determines a monitoring position of the type0-PDCCH corresponding to the received SSB. In S103, the terminal 20 monitors the type0-PDCCH at the monitoring position determined in S102.

In S102, the terminal 20 determines the Y slot so that type0-PDCCH CSS monitoring slots corresponding to all SSB indexes are included in the Y slot. The details of this method will be described below as Example 1-1. An example on the number of slots to monitor and the like will be described as Example 1-2. Example 1-1 and Example 1-2 can be carried out in combination.

The number of slots constituting the slot group and the time length and the time position of the Y slot in Examples 1 and 2 may be defined in advance in a technical specification or the like, or may be notified from the base station 10 to the terminal 20 by RRC, MAC CE, DCI, or the like. Note that the SSB may be referred to as a synchronization signal.

In the operation shown in FIG. 14, from the viewpoint of the base station 10, the base station 10 performs the same calculation as the calculation of the relational equation between SSBs and type0-PDCCH CSS monitoring slots in the terminal 20 described below, for each SSB, and thus the base station 10 can transmit the type0-PDCCH in slots expected by each terminal.

Further, since the terminal 20 transmits a RACH preamble by a resource corresponding to SSB after receiving the SSB, the base station 10 can determine the SSB received by the terminal 20 by receiving the preamble by the resource. The base station 10 may transmit the type0-PDCCH to the terminal 20 in a slot corresponding to the SSB determined by the base station 10.

### (Example 1-1)

As described above, in Example 1-1, the terminal 20 determines monitoring slots such that type0-PDCCH CSS monitoring slots corresponding to all SSB indexes are included in the Y slot. Specific examples will be described as option 1 and option 2.

### <Example 1-1: Option 1>

Option 1 uses a new value, which is not present in existing values, for M in the before-mentioned equation n₀=(O*2*^{µ}*+floor(i*M))modNₛₗₒₜ^{frame,*µ*}. For example, there are the following option 1-1 and option 1-2.

Option 1-1: A multiple of 4 is used as a new value of M. For example, M=4, M=8, and the like are used.

Option 1-2: A function of µ is used as a new value of M. For example, M=4×2^{*µ*-5}( *µ* ≧ 5 ) is used.

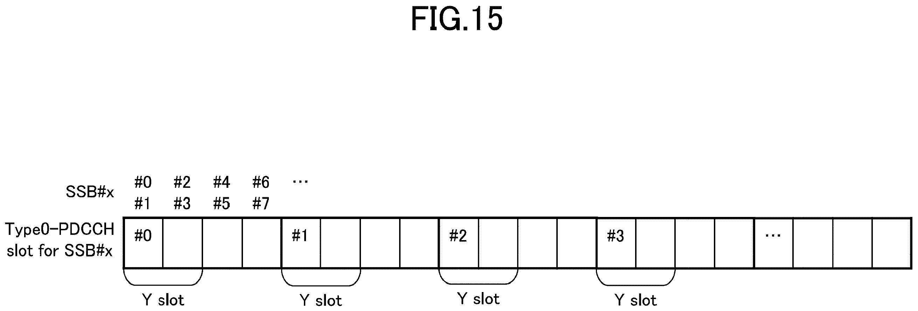

An example of using M=4 is shown in FIG. 15. In the example of FIG. 15, {SSB, CORESET#0/Type0-PDCCH}={480,480}kHz holds true as for SCS, and one slot group is formed with four slots. Also, it is assumed that the Y slot is the first two slots of the slot group. For convenience of explanation, O=0.

The example of FIG. 15 may be option 1-1 or option 1-2 (M=4 × 2^{*µ*-5}, *µ* =5). As illustrated in FIG. 15, the terminal 20 can calculate no corresponding to any SSB#x to be included in the Y slot.

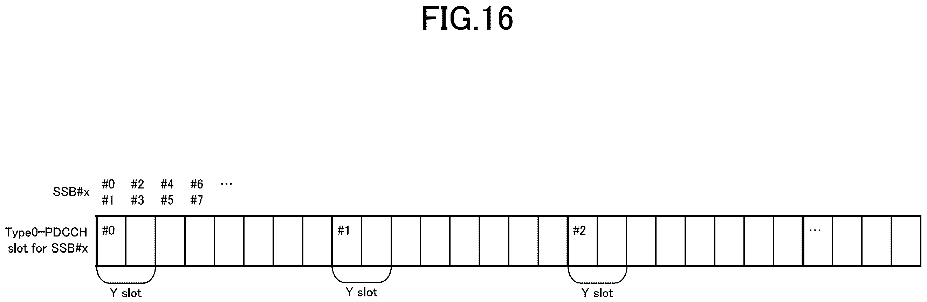

An example of using M=8 is shown in FIG. 16. In the example of FIG. 16, {SSB, CORESET#0/Type0-PDCCH}={960,960}kHz holds true as for SCS, and one slot group is formed with eight slots. Also, it is assumed that the Y slot is the first two slots of the slot group. For convenience of explanation, O=0.

The example of FIG. 16 may be option 1-1 or option 1-2 (M=4×2^{*µ*-5}, *µ* =6) . As illustrated in FIG. 16, the terminal 20 can calculate no corresponding to any SSB#x to be included in the Y slot.

### <Example 1-1: Option 2>

In option 2, the terminal 20 calculates the type0-PDCCH CSS monitoring slot no as n₀= (O*2*^{µ}* +floor(i*M*x))modNₛₗₒₜ^{frame,*µ*}. That is, x to be multiplied by M is introduced.

Option 2 may be applied only when the SCS of the SSB and the CORESET#0 is 480 kHz or 960 kHz. Further, option 2 may be applied according to the value of M. For example, option 2 may be applied only when M=1/2, M=1, or M=2.

For example, the following option 2-1 and option 2-2 are available.

Option 2-1: A multiple of 8 is used as x. For example, x=8, x=16, and the like are used.

Option 2-2: A function of µ is used as the value of x. For example, x=8×2^{*µ*-5} ( *µ* ≧ 5 ) is used.

A specific example in the case of x=8 will be described below.

The type0-PDCCH CSS monitoring slot no in a case where M=1/2 is indicated to the terminal 20 as a parameter in the Type0-PDCCH CSS set - SS/PBCH block and CORESET multiplexing pattern 1 table is the same as that illustrated in FIG. 15. In the example of FIG. 15, it is assumed that {SSB, CORESET#0/Type0-PDCCH}={480,480}kHz holds true as for SCS, and one slot group is formed with four slots. Also, it is assumed that the Y slot is the first two slots of the slot group. For convenience of explanation, O=0.

The example of FIG. 15 may be option 2-1 or option 2-2 (x=8×2^{*µ*-5}, *µ* =5). As illustrated in FIG. 15, the terminal 20 can calculate no corresponding to any SSB#x to be included in the Y slot.

The type0-PDCCH CSS monitoring slot no in a case where M=1 is indicated to the terminal 20 as a parameter in the type0-PDCCH CSS set - SS/PBCH block and CORESET multiplexing pattern 1 table is the same as that illustrated in FIG. 16. In the example of FIG. 16, {SSB, CORESET#0/Type0-PDCCH}={960,960}kHz holds true as for SCS, and one slot group is formed with eight slots. Also, it is assumed that the Y slot is the first two slots of the slot group. For convenience of explanation, O=0.

The example of FIG. 16 corresponds to option 2-1. As illustrated in FIG. 16, the terminal 20 can calculate n₀ corresponding to any SSB#x to be included in the Y slot.

M and x in option 1 and option 2 may be, for example, values defined in the technical specifications, or may be values notified from the base station 10 to the terminal 20 by RRC, MAC CE, DCI, or the like.

### <Example 1-2>

In Example 1-2, the slot in which the terminal 20 monitors the type0-PDCCH CSS is extended. Hereinafter, options 1 to 3 will be described.

### <Example 1-2: Option 1>

In option 1, the terminal 20 monitors only the slot of no. For example, in the example illustrated in FIG. 15, when the terminal 20 receives SSB#0 and n₀=0 is obtained, the terminal 20 monitors only the slot of no=0 of each frame for the type0-PDCCH CSS. In option 1, the time width of the Y slot may be one slot.

### <Example 1-2: Option 2>

In option 2, the terminal 20 monitors two slots (no and no+X slots). X may be 1 or a value larger than 1. X may be the number of slots constituting the slot group. It is assumed that the terminal 20 receives the type0 PDCCH in one of the n₀ slot and the n₀+X slot. The base station 10 may transmit the type0-PDCCH in one of the no slot and the no+X slot, or may transmit the type0-PDCCH in both the n₀ slot and the n₀+X slot.

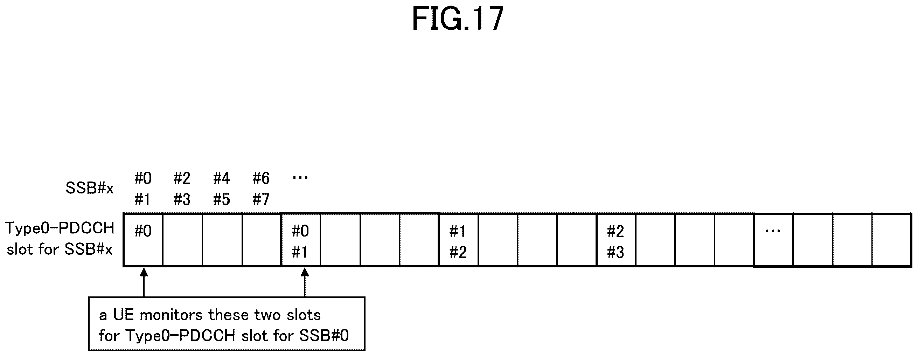

FIG. 17 shows an example of a case where X is the number of slots constituting a slot group in option 2. In the example of FIG. 17, as in the example of FIG. 15, it is assumed that one slot group is formed with four slots, and, for example, slot#0 is calculated as the monitoring slot for SSB#0. In this case, the terminal 20 monitors slot#0 and slot#(0+4).

### <Example 1-2: Option 3>

In option 3, the terminal 20 monitors more than two slots (e.g., n₀, n₀+X, n₀+2X, ...).

X may be 1 or a value larger than 1. X may be the number of slots constituting the slot group. The number of slots to monitor may be defined in the specification, or may be notified from the base station 10 to the terminal 20 by RRC, MAC CE, DCI, or the like.

It is assumed that the terminal 20 receives the type0-PDCCH in at least one slot among a plurality of slots to monitor. The base station 10 transmits the type0-PDCCH in at least one of the plurality of slots.

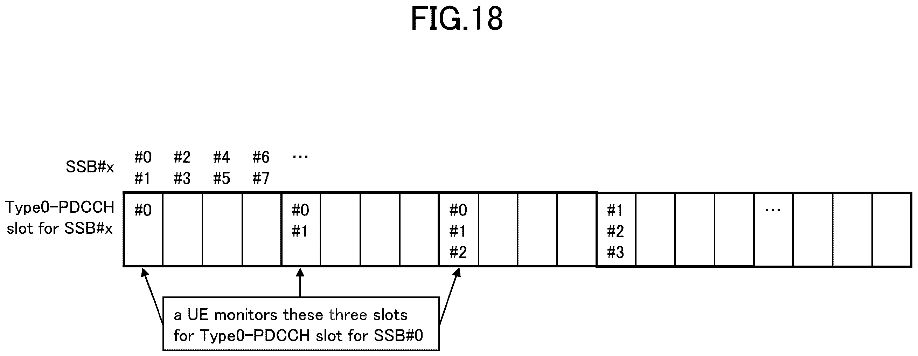

FIG. 18 shows an example of a case where X is the number of slots constituting a slot group and three slots are monitored for one SSB in option 3. In the example of FIG. 18, as in the example of FIG. 15, it is assumed that one slot group is formed with four slots, and, for example, slot#0 is calculated as a monitoring slot for SSB#0. In this case, the terminal 20 monitors slot#0, slot#(0+4), and slot #(0+4×2).

In consideration of the multi-slot PDCCH monitoring restriction, the periodicity of the type0-PDCCH monitoring occasion corresponding to a certain SSB may be increased compared to the related art. However, according to option 3, the terminal 20 performs monitoring in a plurality of slots, and thus it is possible to improve flexibility of the scheduling cycle.

According to Example 1 described above, in the multi-slot PDCCH monitoring, the terminal 20 can appropriately monitor the type0-PDCCH.

The technique described in Example 1, that is, the technique of determining the PDCCH monitoring slot so that the PDCCH monitoring slot corresponding to the received SSB is included in the Y slot, is not limited to the type0-PDCCH, and may be applied to other types of PDCCHs.

### (Example 2)

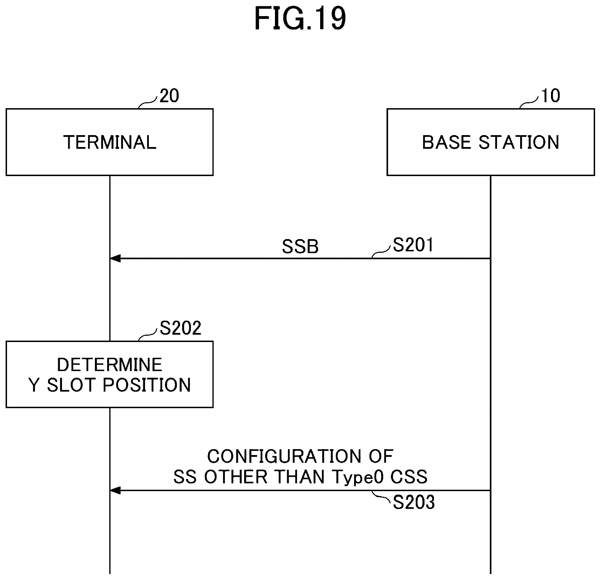

Next, Example 2 will be described. The entire basic processing procedure of Example 2 will be described with reference to FIG. 19. Example 2 is assumed to be combined with Example 1, but is not limited thereto. Example 2 may be carried out separately from Example 1.

In S201, the terminal 20 receives SSB transmitted from the base station 10. In S202, the terminal 20 determine a time position of the Y slot. In S203, the terminal 20 receives, from the base station 10, configuration of SS, other than the type0-PDCCH CSS, corresponding to the position of the Y slot determined in S202 .

Hereinafter, the process of determining the Y slot position by the terminal 20 will be described as "step 1", and the process related to the configuration of the SS other than the type0-PDCCH CSS will be described as "step 2". Note that "step 1" and "step 2" may be applied to initial configuration (determination) of the Y slot and the monitoring slot, and "step 1" and "step 2" may be applied to configuration (determination) of the Y slot and the monitoring slot when updating.

For configuring the time position of the SS other than the type0-PDCCH CSS such that the time position is included in the Y slot determined in S202, configuration can be performed from the base station 10 to the terminal 20 as described above, and determination (configuration) can also be performed by the terminal 20 and by the base station 10 individually.

The time width of the Y slot in Example 2 may be determined in advance in the technical specification, may be determined by the terminal 20 (and the base station 10) in S202, or may be notified from the base station 10 to the terminal 20 by RRC, MAC CE, DCI, or the like.

In Example 2, the terminal 20 transmits a RACH preamble by using a resource corresponding to SSB after receiving the SSB, and the base station 10 receives the preamble by using the resource, thereby determining the SSB received by the terminal 20. Therefore, the base station 10 can determine (update) the Y slot by the same method as that of the terminal 20 described below, and the base station 10 can perform configuration of the SS other than the type0-PDCCH CSS such that the SS is included in the Y slot, and can transmit a PDCCH at the time position included in the Y slot.

### <Example 2: Step 1>

The terminal 20 determines the position of the Y slot in the slot group in multi-slot PDCCH monitoring such that the Y slot includes a slot of n₀, or a slot of n₀+X, or "a slot of no and a slot of no+X". X may be 1, or X may be the number of slots constituting the slot group. Example 1 can be applied to the method of determining no, no+X, and the like. However, Example 2 may be applied to a case where no and no+1 are determined by the existing technology.

In more detail, for example, the terminal 20 may determine the position of the Y slot based on any one of the slot of no and the slot of no+X in which the type0-PDCCH CSS is monitored.

Note that the terminal 20 may determine the Y slot in the slot group based on the monitoring slot of type0A/1/2/3-CSS/USS, instead of the monitoring slot of type0-PDCCH CSS. In this case, the monitoring slot of the type0-PDCCH CSS may be determined to be matched with the Y slot determined based on the monitoring slot of the type0A/1/2/3-CSS/USS.

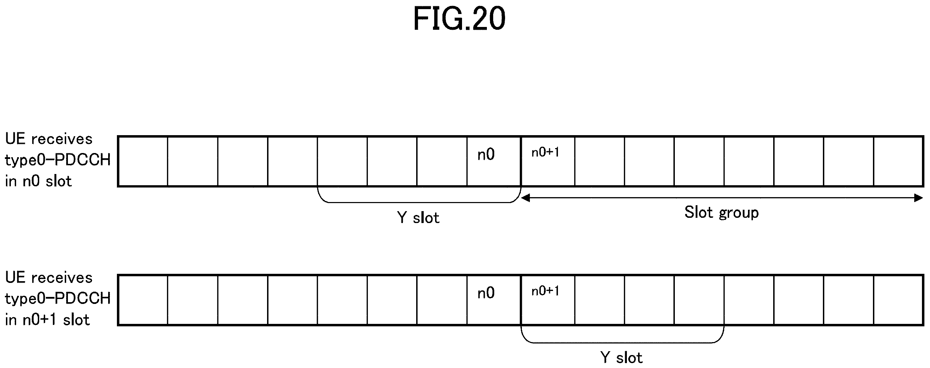

An example will be described with reference to FIG. 20. FIG. 20 shows an example of a case where one slot group is formed with eight slots.

It is assumed that the terminal 20 determines a slot of no and a slot of no+1 which cross the slot group boundary as the monitoring slots of the type0-PDCCH CSS as illustrated in FIG. 20. In this case, the terminal 20 may determine the Y slot based on a slot (the slot of n₀ in the example of the upper part of FIG. 20) in which the type0-PDCCH is actually received. That is, in the example of the upper part of FIG. 20, four slots from the end of the slot group toward the head are determined as the Y slot so as to include the slot of no without crossing the boundary of the slot group. After determining the Y slot, the terminal 20 performs PDCCH monitoring at the position of the Y slot shown in the upper part of FIG. 20 in each slot group while the SSB is not changed.

In the example of the lower part of FIG. 20, four slots from the head of the slot group are determined as the Y slot so as to include no+1 slot without crossing the boundary of the slot group. After determining the Y slot, the terminal 20 performs PDCCH monitoring at the position of the Y slot shown in the lower part of FIG. 20 in each slot group while the SSB is not changed.

When no is updated due to a change in the SSB received by the terminal 20, the terminal 20 updates the position of the Y slot in the slot group. The method of determining the Y slot in update may be the same as the above-described method of determining the initial Y slot, or the method of determining the Y slot at the time of update may be different from the method of determining the initial Y slot.

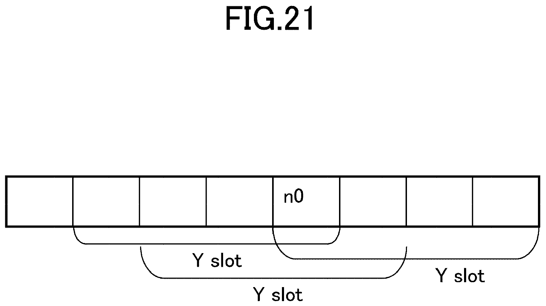

In addition, in both cases of update and initial determination, when the Y slot is larger than one slot, the terminal 20 may determine the position of the Y slot, for example, as illustrated in FIG. 21. That is, the terminal 20 may determine the position of the Y slot such that the n₀ slot is included in the first slot, the last slot, or the (last-Q) slot of the Y slot. The (last-Q) slot of the Y slot is the Q-th slot counted from the last slot toward the head in the Y slot. However, Q of the last slot is 0. Q may be 1 or a number larger than 1. In addition, the " no slot" here may be any type0-PDCCH monitoring slot.

As described above, since the base station 10 can recognize the SSB received by the terminal 20, the base station 10 can determine/update the Y slot in the same manner that the terminal 20 determines/updates the Y slot.

In both Example 1 and Example 2, regarding the symbols serving as monitoring occasions in the Y slot, the terminal 20 may assume that all the symbols in the Y slot serve as monitoring occasions, or may assume that only one of the symbols is limited to serve as a monitoring occasion. This limitation may vary depending on the UE capability.

For example, symbols that can be set as monitoring occasions may be limited for at least one SS of type0/0A/1/2/3CSS/USS.

### <Example 2: Step 2>

In step 2, SSs (one or more SSs) other than the type0-PDCCH CSS are configured (determined) such that the terminal 20 can monitor the SSs in the Y slot. The determination process may be performed by the base station 10, and configuration may be performed from the base station 10 to the terminal, or the determination process may be performed by each of the terminal 20 and the base station 10.

The other SSs include at least one of CSS of type0A/1 (before RRC connection and/or after RRC connection)/2/3 and USS.

Further, a monitoring slot of type0A/ 2-PDCCH CSS of which the monitoring position is determined based on SSB (this is referred to as SSB#A) received by the terminal 20 may be determined to be included in the Y slot determined based on no corresponding to the SSB#A. In this regard, there are the following options 1 and 2.

Option 1: In SCS of 480/960 kHz, the monitoring slot of the type0A/2-PDCCH CSS is determined to be included in the Y slot determined based on the monitoring slot of type0-PDCCH CSS corresponding to the SSB#A. That is, in the SCS of 480/960 kHz, the relationship between the type0A/2-PDCCH CSS and the SSB may be changed from the existing technical specification.

Option 2: The terminal 20 may shift the monitoring slot of the type0A/2-PDCCH CSS to be included in the Y slot. This process may be applied to "SSs other than the type0A/2-PDCCH CSS" other than the type0A/2-PDCCH CSS.

### <Operation for updating>

When no is updated and the terminal 20 updates the time position of the Y slot in a slot group, the time domain configuration of the SS other than the type0-PDCCH CSS may be updated to be included in the Y slot after the update. The following options 1, 2, and 3 are available as the updating method.

Option 1: The base station 10 updates the configuration of the time domain of the SS other than the type0-PDCCH CSS for the terminal 20 by RRC reconfiguration.

Option 2: The terminal 20 shifts the time position of the SS other than the type0-PDCCH CSS to be aligned with the updated Y slot, and the base station 10 activates a new TCI state, for example, by a MAC CE. That is, in this case, since the SSB is updated, the QCL relation (TCI state) of the PDCCH of the SS other than the type0-PDCCH CSS needs to be adapted to the updated SSB. Therefore, a new TCI state is activated.

Note that signaling for transmitting a plurality of TCI IDs for a plurality of CORRSET IDs may be supported by the MAC CE. In this case, the terminal 20 can apply any one of the plurality of TCI IDs which have been already received to "SS other than type0-PDCCH CSS" after the SSB update.

The terminal 20 may shift the time position of the "SS other than type0-PDCCH CSS" using a slot offset z between no before update and no after update. The slot group to which the shifted position of the SS other than the type0-PDCCH CSS belongs may be different from the slot group before the update.

In addition, when the SSB is updated, the terminal 20 may update the slot of the monitoring occasion of the type0A/2-PDCCH CSS according to the existing technical specification, and may shift the updated monitoring slot so as to be included in the updated Y slot.

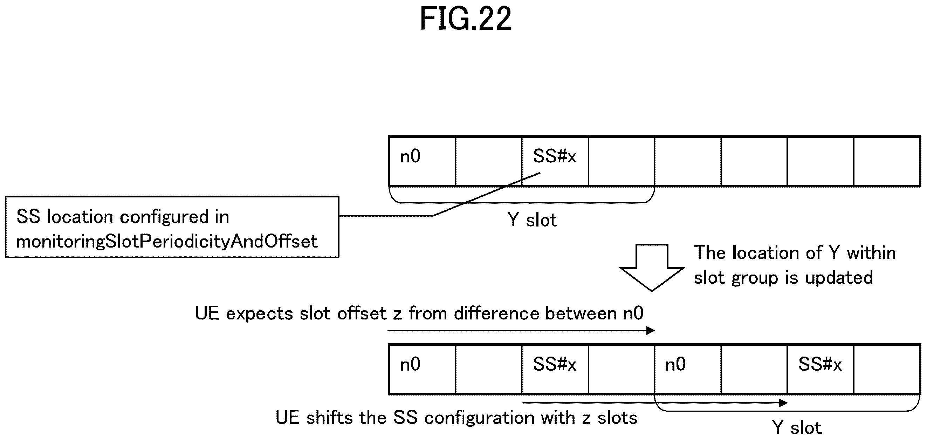

An example of option 2 will be described with reference to FIG. 22. Before the Y slot is updated, the terminal 20 monitors the type0-PDCCH in no slot in the Y slot as illustrated in the figure, and monitors a PDCCH of SS#x in the slot of SS#x configured by monitoringSlotPeriodicityAndOffset in SearchSpace.

When the Y slot is updated as illustrated in the figure, the terminal 20 applies the slot offset z between no before update and no after update to the monitoring slot of SS#x, and monitors a PDCCH of SS#x at the slot position (position in the Y slot after update) shifted by z. Since the same process is performed in the base station 10, the terminal 20 can monitor the PDCCH of the SS#x in the Y slot. Further, the base station 10 can transmit the PDCCH at the time position of SS#x.

Option 3: A slot of a monitoring occasion of type1/3 CSS and/or USS may be determined in association with an index of SSB received by the terminal 20.

The relationship between the slot of the monitoring occasion of type1/3 CSS and/or USS and the SSB may be defined in the technical specification or may be indicated from the base station 10 to the terminal 20 by higher layer signaling.

For example, the same relationship, between SSB and monitoring slot, of any one of type0-PDCCH CSS, type0A-PDCCH, and type2-PDCCH may be applied to type1 CSS, type3 CSS, or USS.

According to Example 2 described above, it is possible to determine and update the Y slot and determine and update the monitoring slot of the SS so that the PDCCH can be appropriately monitored.

### (Other examples and variations)

Here, an example commonly applied to the present embodiment (Example 1 and Example 2) will be described. At least one of the plurality of options described in Example 1 and Example 2 may be supported. The plurality of options described in Example 1 and Example 2 may be arbitrarily combined and carried out.

Further, each proposal described in Example 1 and Example 2 may be applied only to a specific SCS (for example, an SCS of 480 kHz or higher). Also, each proposal described in Example 1 and Example 2 may be applied only to a specific frequency range (e.g., FR2-2). Furthermore, each proposal described in Example 1 and Example 2 may be applied to the licensed band, may be applied to the unlicensed band, or may be applied to both of the licensed band and the unlicensed band.

Further, each proposal described in Example 1 and Example 2 may be applied based on signaling of capability information (UE capability) from the terminal 20 to the base station 10. For example, when the base station 10 determines that the terminal 20 has a capability of any of the proposals described in Example 1 and Example 2, the base station 10 may apply the proposal.

### (Apparatus Configuration)

Next, functional configuration examples of the base station 10 and the terminal 20 that execute the processes and operations described above will be described.

### <Base station 10>

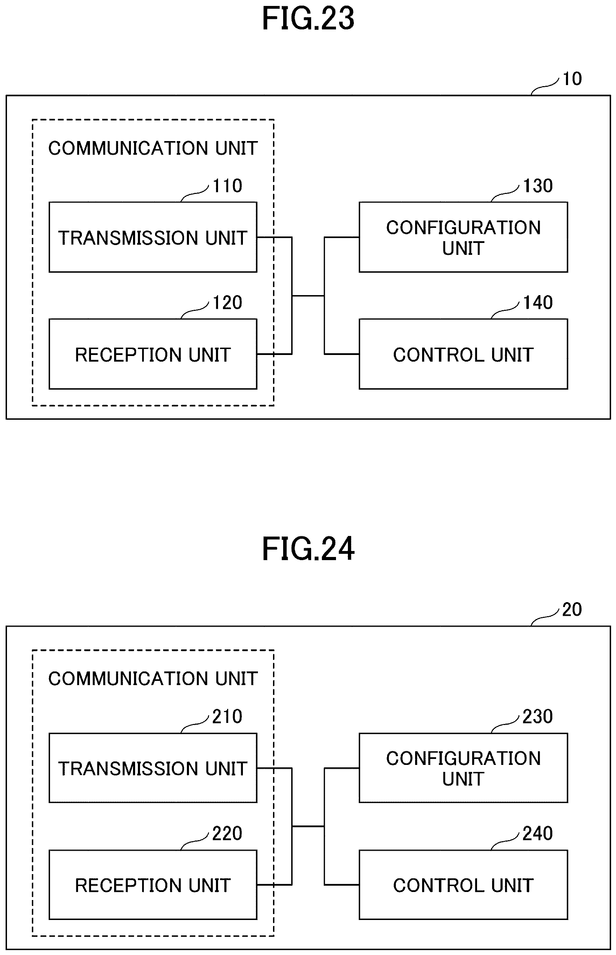

FIG. 23 is a diagram illustrating an example of a functional configuration of the base station 10. As illustrated in FIG. 23, the base station 10 includes a transmission unit 110, a reception unit 120, a configuration unit 130, and a control unit 140. The functional configuration shown in FIG. 23 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 24 is a diagram illustrating an example of a functional configuration of the terminal 20. As illustrated in FIG. 11, the terminal 20 includes a transmission unit 210, a reception unit 220, a configuration unit 230, and a control unit 240. The functional configuration shown in FIG. 11 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

### <Supplementary Notes Related to Example 1>

The present embodiment provides at least a terminal, a base station, and a monitoring method described in the following items 1-6.

### (Item 1)

A terminal including:
a reception unit configured to receive a synchronization signal from a base station;
a control unit configured to determine a time position to monitor a downlink control channel based on the synchronization signal such that the downlink control channel can be monitored within a specific time range in a slot group.

### (Item 2)

The terminal as described in item 1,
wherein the control unit determines the time position using a calculation formula including a value of a multiple of 4.

### (Item 3)

The terminal as described in item 1 or 2,
wherein the control unit determines the time position using a calculation formula including a function of a value of a numerology.

### (Item 4)

The terminal as described in items 1 to 3,
wherein the reception unit monitors the downlink control channel in only one slot, two slots, or three or more slots.
wherein

### (Item 5)

A base station including:
a transmission unit configured to transmit a synchronization signal to a terminal;
a control unit configured to determine a time position to transmit a downlink control channel based on the synchronization signal received by the terminal such that the terminal can monitor the first downlink control channel within a specific time range in a slot group.

### (Item 6)

A monitoring method executed by a terminal, including:
receiving a synchronization signal from a base station;
determining a time position to monitor a downlink control channel based on the synchronization signal such that the downlink control channel can be monitored within a specific time range in a slot group.

According to any of the items 1 to 6, in multi-slot PDCCH monitoring, a terminal can appropriately perform PDCCH monitoring. In particular, in items 2 and 3, since the calculation is performed by formulas, the determination can be made clearly. According to item 4, flexibility of scheduling is improved.

### <Supplementary Notes Related to Example 2>

The present embodiment provides at least a terminal, a base station, and a monitoring method described in the following items 1 to 6.

### (Item 1)

A terminal comprising:
a control unit configured to determine a specific time range such that a first time position for monitoring a first downlink control channel is included within the specific time range in a slot group; and
a reception unit configured to monitor the first downlink control channel within the specific time range.

### (Item 2)

The terminal as described in item 1,
wherein the control unit determines a second time position for monitoring a second downlink control channel that is monitored in a search space different from a search space of the first downlink control channel such that the reception unit can monitor the second downlink control channel within the specific time range.

### (Item 3)

The terminal as described in item 1 or 2,
wherein, when the first time position for monitoring the first downlink control channel is updated, the control unit updates the specific time range such that the specific time range includes the updated first time position.

### (Item 4)

The terminal as described in item 3,
wherein the control unit updates the second time position such that the updated specific time range includes the second time position.

### (Item 5)

A base station includes:
a control unit configured to determine a specific time range such that a first time position for transmitting a first downlink control channel is included within the specific time range in a slot group; and
a transmission unit configured to transmit the downlink control channel within the specific time range.

### (Item 6)

A monitoring method executed by a terminal, comprising:
determining a specific time range such that a first time position for monitoring a first downlink control channel is included within the specific time range in a slot group; and
monitoring the downlink control channel within the specific time range.

According to any of the items 1 to 6, in multi-slot PDCCH monitoring, a terminal can appropriately perform PDCCH monitoring. According to item 2, it is possible to appropriately monitor the second downlink control channel. According to items 3 and 4, even when SSB or the like is updated, monitoring can be appropriately performed.

### (Hardware Configuration)

The block diagrams (FIGS. 23 and 24) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

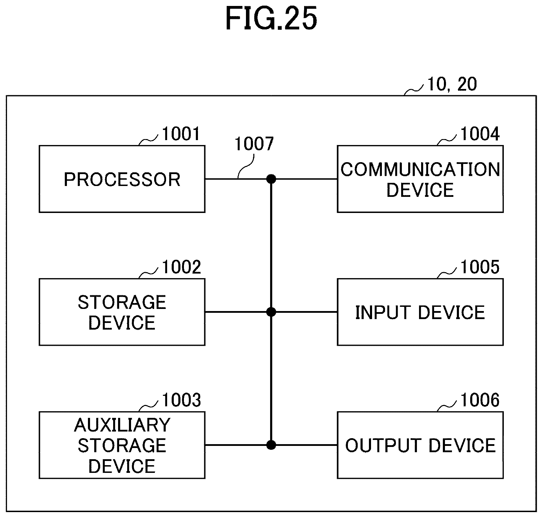

For example, the base station 10, the terminal 20 and the like in one embodiment of this disclosure may function as a computer for performing the processing of a radio communication method of this disclosure. FIG. 25 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 23 may be attained by a control program that is stored in the storage device 1002 and is operated by the processor 1001. Also, for example, the control unit 240 of the terminal 20 shown in FIG. 24 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

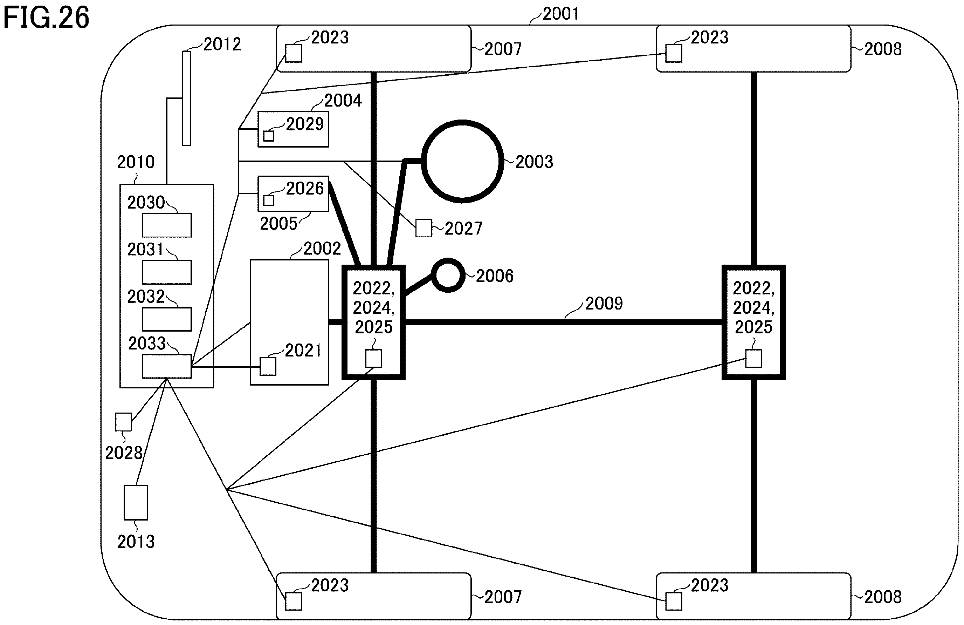

The terminal 20 or the base station 10 may be provided in a vehicle. FIG. 26 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage unit
- 1003: auxiliary storage unit
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A terminal comprising:
a control unit configured to determine a specific time range such that a first time position for monitoring a first downlink control channel is included within the specific time range in a slot group; and
a reception unit configured to monitor the first downlink control channel within the specific time range.

2. The terminal as claimed in claim 1,
wherein the control unit determines a second time position for monitoring a second downlink control channel that is monitored in a search space different from a search space of the first downlink control channel such that the second downlink control channel is monitorable within the specific time range by the reception unit.

3. The terminal as claimed in claim 1 or 2,
wherein, when the first time position for monitoring the first downlink control channel is updated, the control unit updates the specific time range such that the specific time range includes the updated first time position.

4. The terminal as claimed in claim 3 depending from claim 2,
wherein the control unit updates the second time position such that the updated specific time range includes the second time position.

5. A base station comprising:
a control unit configured to determine a specific time range such that a first time position for transmitting a first downlink control channel is included within the specific time range in a slot group; and
a transmission unit configured to transmit the first downlink control channel within the specific time range.

6. A monitoring method executed by a terminal, the monitoring method comprising:
determining a specific time range such that a first time position for monitoring a first downlink control channel is included within the specific time range in a slot group; and
monitoring the first downlink control channel within the specific time range.
